# EUROPEAN PATENT APPLICATION

(11) **EP 4 426 031 A1**
(43) Date of publication of application: **04.09.2024**
(21) Application number: 21961919.4
(22) Date of filing: 29.10.2021
(51) Int. Cl.: H04W 72/04

(54) **BANDWIDTH PART DETERMINATION METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Kudlek, Franz Thomas
(86) International application number: PCT/CN2021/127596
(87) International publication number: WO 2023/070564

(57) **Abstract**

The present disclosure relates to a bandwidth part (BWP) determination method and apparatus, and a storage medium. The BWP determination method is applied to a terminal, and the BWP determination method comprises: determining a first BWP, wherein the first BWP is a BWP monitored after a terminal completes random access, the first BWP is different from a second BWP, and the second BWP is a BWP used when the terminal performs random access. By means of the present disclosure, the determination of BWPs, which need to be monitored after a terminal completes random access, is realized.

## Description

### TECHNICAL FIELD

The present disclosure relates to the technical field of communication, and in particular, to a bandwidth part determination method, apparatus and a storage medium.

### BACKGROUND

In the Long Term Evolution (LTE) 4G system, in order to support the Internet of Things services, two technologies, Machine Type Communication (MTC) and Narrow band Internet of things (NB-IoT) have been proposed. These two technologies are mainly aimed at low-speed, high-latency scenarios, such as meter reading, environmental monitoring and other scenarios. NB-IoT currently only supports a maximum rate of a few hundred k, and MTC currently only supports a maximum rate of a few M. With the continuous development of the Internet of Things services, such as popularization of video surveillance, smart home, wearable devices and industrial sensor monitoring and other services, these services usually require a rate of tens to 100M, and also have relatively high requirements for delay. Therefore, the MTC and NB-IoT technologies in the related art are difficult to meet the requirements. Therefore, it is proposed to design a new terminal type in 5G New Radio (NR) to cover the requirement of the medium-end IoT devices. In the current 3GPP standardization, this new terminal type is called a low-capability terminal, sometimes also called a Reduced capability UE, or a Redcap terminal, or NR-lite for short.

In the related art, considering factors such as the center frequency point distribution of the time division multiplexing (TDD center frequency-alignment) and the synchronization broadcast signal block (Synchronization Signal and PBCH block, SSB) overhead of the Redcap terminal, in the related art, a downlink initial bandwidth part (Initial DL BWP) is newly introduced. The newly introduced Initial DL BWP is dedicated to random access (Random Access Channel, RACH), and the Initial DL BWP may not include SSB, etc.

Based on the above-mentioned Initial DL BWP dedicated to random access, the Redcap terminal can complete random access. However, after the Redcap terminal completes the random access based on the Initial DL BWP dedicated to random access, which BWP the terminal should monitor is an urgent problem to be solved.

### SUMMARY

In order to overcome the problems existing in the related art, the present disclosure provides a bandwidth part determination method, apparatus and a storage medium.

According to the first aspect of the embodiments of the present disclosure, there is provided a BWP determination method, which is applied to a terminal, and the BWP determination method includes:
determining a first BWP, where the first BWP is a BWP monitored after the terminal completes a random access; the first BWP is different from a second BWP, and the second BWP is a BWP used when the terminal performs the random access.

In an implementation, the BWP determination method further includes: in response to the terminal completing the random access, switching from the second BWP to the first BWP for monitoring.

In an implementation, determining the first BWP includes:
acquiring an instruction sent by a network device, where the instruction is used to configure the first BWP that the terminal needs to monitor subsequently; and determining the first BWP based on the instruction.

In an implementation, the instruction includes a dedicated signaling of the terminal, and the first BWP that the terminal needs to monitor subsequently is configured in the dedicated signaling of the terminal; or the instruction includes a broadcast signaling shared by a terminal of first type, the broadcast signaling is used to configure the first BWP, a communication capability of the terminal of first type is lower than a capability threshold, and the communication capability includes one or more of a transmitting and receiving bandwidth, a number of transmitting and receiving antennas, a maximum number of bits of a transport block, or a processing time delay.

In an implementation, the BWP determination method further includes: determining a third BWP in response to the first BWP not being configured in the acquired instruction; where the third BWP is a default BWP used by the terminal, and is determined based on a common control resource set.

In an implementation, the method further includes: determining to switch to the first BWP for monitoring based on configuration information; where the configuration information includes an information field for indicating to enable or disable the first BWP.

In an implementation, in response to satisfying a predefined condition, the configuration information includes an information field for indicating to enable the first BWP; the predefined condition includes at least one of following conditions: the second BWP is a BWP dedicated to the random access; a default BWP of the terminal is not configured in a dedicated signaling of the terminal.

In an implementation, the first BWP includes a synchronization broadcast signal block.

In an implementation, the method further includes: in response to that the terminal monitors a timeout of a timer corresponding to a fourth BWP dynamically indicated by a network, falling back to the first BWP; where the timer is a timer configured by the network when configuring a dynamic BWP switch for the terminal.

According to the second aspect of the embodiments of the present disclosure, there is provided a bandwidth part (BWP) determination method, which is applied to a network device, and the BWP determination method includes:
sending an instruction, where the instruction is used to configure a first BWP that a terminal needs to monitor subsequently; the first BWP is a BWP monitored after the terminal completes a random access; the first BWP is different from a second BWP, and the second BWP is a BWP used when the terminal performs the random access.

In an implementation, the instruction includes a dedicated signaling of the terminal, and the first BWP that the terminal needs to monitor subsequently is configured in the dedicated signaling of the terminal; or the instruction includes a broadcast signaling shared by a terminal of first type, the broadcast signaling is used to configure the first BWP, a communication capability of the terminal of first type is lower than a capability threshold, and the communication capability includes one or more of a transmitting and receiving bandwidth, a number of transmitting and receiving antennas, a maximum number of bits of a transport block, or a processing time delay.

In an implementation, the method further includes:
sending configuration information, where the configuration information includes an information field for indicating to enable or disable the first BWP.

In an implementation, in response to satisfying a predefined condition, the configuration information includes an information field for indicating to enable the first BWP;
the predefined condition includes at least one of following conditions:
the second BWP is a BWP dedicated to the random access; or
a default BWP of the terminal is not configured in a dedicated signaling of the terminal.

In an implementation, the method further includes: communicating with the terminal based on the first BWP.

According to the third aspect of an embodiment of the present disclosure, there is provided a bandwidth part (BWP) determination apparatus, which is applied to a terminal, and the BWP determination apparatus includes:
a processing unit, configured to determine a first BWP, where the first BWP is a BWP monitored after the terminal completes a random access; the first BWP is different from a second BWP, and the second BWP is a BWP used when the terminal performs the random access.

In an implementation, the processing unit is further configured to: in response to the terminal completing the random access, switch from the second BWP to the first BWP for monitoring.

In an implementation, the BWP determination apparatus further includes an acquiring unit, configured to acquire an instruction sent by a network device, where the instruction is used to configure the first BWP that the terminal needs to monitor subsequently; the processing unit is configured to determine the first BWP based on the instruction.

In an implementation, the instruction includes a dedicated signaling of the terminal, and the first BWP that the terminal needs to monitor subsequently is configured in the dedicated signaling of the terminal; or the instruction includes a broadcast signaling shared by a terminal of first type, the broadcast signaling is used to configure the first BWP, a communication capability of the terminal of first type is lower than a capability threshold, and the communication capability includes one or more of a transmitting and receiving bandwidth, a number of transmitting and receiving antennas, a maximum number of bits of a transport block, or a processing time delay.

In an implementation, the BWP processing unit is further configured to: determine a third BWP in response to the first BWP not being configured in the acquired instruction; where the third BWP is a default BWP used by the terminal, and is determined based on a common control resource set.

In an implementation, the processing unit is configured to: determine to switch to the first BWP for monitoring based on configuration information; where the configuration information includes an information field for indicating to enable or disable the first BWP.

In an implementation, in response to satisfying a predefined condition, the configuration information includes an information field for indicating to enable the first BWP; the predefined condition includes at least one of following conditions:
the second BWP is a BWP dedicated to the random access; a default BWP of the terminal is not configured in a dedicated signaling of the terminal.

In an implementation, the first BWP includes a synchronization broadcast signal block.

In an implementation, the processing unit is further configured to: in response to that the terminal monitors a timeout of a timer corresponding to a fourth BWP dynamically indicated by a network, fall back to the first BWP; where the timer is a timer configured by the network when configuring a dynamic BWP switch for the terminal.

According to the fourth aspect of an embodiment of the present disclosure, there is provided a bandwidth part (BWP) determination apparatus, including:
a sending unit, configured to send an instruction, where the instruction is used to configure a first BWP that a terminal needs to monitor subsequently; the first BWP is a BWP monitored after the terminal completes a random access; the first BWP is different from a second, and the second BWP is a BWP used when the terminal performs the random access.

In an implementation, the instruction includes a dedicated signaling of the terminal, and the first BWP that the terminal needs to monitor subsequently is configured in the dedicated signaling of the terminal; or the instruction includes a broadcast signaling shared by a terminal of first type, the broadcast signaling is used to configure the first BWP, a communication capability of the terminal of first type is lower than a capability threshold, and the communication capability includes one or more of a transmitting and receiving bandwidth, a number of transmitting and receiving antennas, a maximum number of bits of a transport block, or a processing time delay.

In an implementation, the sending unit is further configured to: send configuration information, where the configuration information includes an information field for indicating to enable or disable the first BWP.

In an implementation, in response to satisfying a predefined condition, the configuration information includes an information field for indicating to enable the first BWP.

The predefined condition includes at least one of following conditions: the second BWP is a BWP dedicated to the random access; or a default BWP of the terminal is not configured in a dedicated signaling of the terminal.

In an implementation, the sending unit is further configured to communicate with the terminal based on the first BWP.

According to the fifth aspect of an embodiment of the present disclosure, there is provided a bandwidth part (BWP) determination apparatus, including:
a processor; and a memory for storing instructions executable by the processor;
where the processor is configured to execute the BWP determination method described in the first aspect or any implementation of the first aspect.

According to the sixth aspect of an embodiment of the present disclosure, there is provided a bandwidth part (BWP) determination apparatus, including:
a processor; and a memory for storing instructions executable by the processor;
where the processor is configured to execute the BWP determination method described in the second aspect or any implementation manner of the second aspect.

According to the seventh aspect of the embodiments of the present disclosure, there is provided a storage medium, the storage medium stores instructions, and when the instructions in the storage medium are executed by a processor of a terminal, the terminal is enabled to execute the BWP determination method described in the first aspect or any implementation of the first aspect.

According to the eighth aspect of the embodiments of the present disclosure, there is provided a storage medium, the storage medium stores instructions, and when the instructions in the storage medium are executed by a processor of a terminal, the terminal is enabled to execute the BWP determination method described in the second aspect or any implementation of the second aspect.

The technical solutions provided by the embodiments of the present disclosure may include the following beneficial effects: the first BWP to be monitored after the terminal completes random access is determined, and the first BWP is different from the second BWP used by the terminal for random access, thereby realizing determination of the BWP to be monitored after the terminal completes the random access.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
FIG. 1 is a schematic diagram of a wireless communication system according to an exemplary embodiment.
FIG. 2 is a flowchart showing a BWP determination method according to an exemplary embodiment.
FIG. 3 is a flowchart showing a BWP determination method according to an exemplary embodiment.
FIG. 4A and FIG. 4B are flowcharts showing a BWP determination method according to an exemplary embodiment.
FIG. 5A and FIG. 5B are flowcharts showing a BWP determination method according to an exemplary embodiment.
FIG. 6 is a flowchart showing a BWP determination method according to an exemplary embodiment.
FIG. 7 is a flowchart showing a BWP determination method according to an exemplary embodiment.
FIG. 8 is a flowchart showing a BWP determination method according to an exemplary embodiment.
FIG. 9 is a block diagram of a BWP determination apparatus according to an exemplary embodiment.
FIG. 10 is a block diagram of a BWP determination apparatus according to an exemplary embodiment.
FIG. 11 is a block diagram of an apparatus for determining a BWP according to an exemplary embodiment.
FIG. 12 is a block diagram of an apparatus for determining a BWP according to an exemplary embodiment.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary examples do not represent all implementations consistent with the present disclosure.

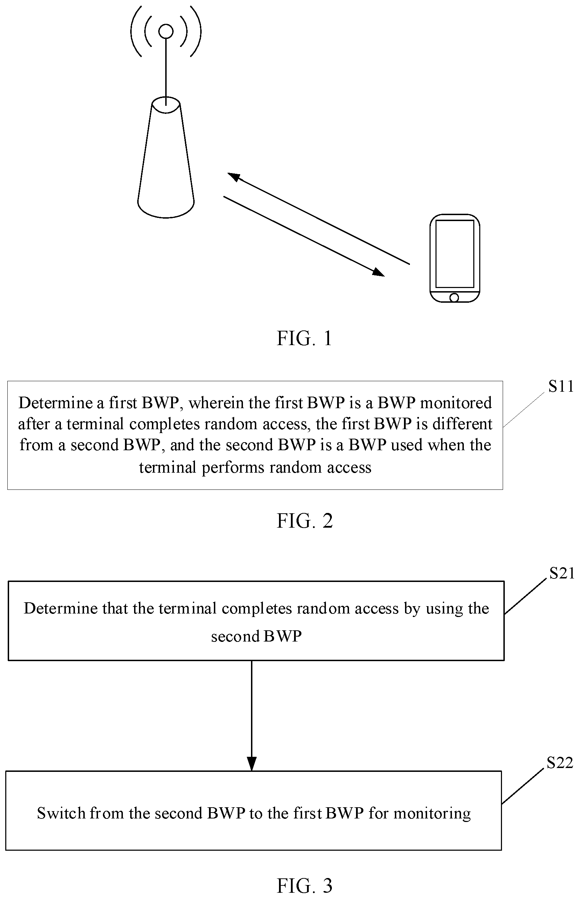

The method for determining an initial bandwidth part provided by the embodiments of the present disclosure may be applied to the wireless communication system shown in FIG. 1. Referring to FIG. 1, the wireless communication system includes a terminal and a network device. Information is sent and received between the terminal and the network device through wireless resources.

It can be understood that the wireless communication system shown in FIG. 1 is only for schematic illustration, and the wireless communication system may also include other network devices, such as a core network device, a wireless relay device, and a wireless backhaul device, etc., which are not shown in FIG. 1. The embodiments of the present disclosure do not limit the number of the network device and the terminal included in the wireless communication system.

It can be further understood that the wireless communication system in the embodiments of the present disclosure is a network that provides a wireless communication function. The wireless communication system may use different communication technologies, such as code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA), Carrier Sense Multiple Access with Collision Avoidance. According to the capacity, speed, delay and other factors of different networks, the network can be divided into 2^{nd} generation (2G) network, 3G network, 4G network or future evolution network, such as 5G network, and 5G network can also be called a New Radio (NR). For convenience of description, the present disclosure sometimes simply refers to the wireless communication network as a network.

Further, the network device involved in the present disclosure may also be referred to as a wireless access network device. The wireless access network device may be: a base station, an evolved base station (evolved node B, base station), a home base station, an access point (AP) in a wireless fidelity (WIFI) system, a wireless relay node, a wireless backhaul node, a transmission point (TP) or a transmission and reception point (TRP), etc., may also be gNB in the NR system, or may also be a component, a part of device, or the like that constitutes a base station. When it is a vehicle-to-everything (V2X) communication system, the network device may also be a vehicle-mounted device. It should be understood that in the embodiments of the present disclosure, no limitation is imposed on the specific technology and specific device form adopted by the network device.

Further, the terminal involved in the present disclosure may also be referred to as a terminal device, a User Equipment (UE), a Mobile Station (MS), a Mobile Terminal (MT), etc., and is a device providing voice and/or data connectivity to the user. For example, the terminal may be a handheld device, a vehicle-mounted device with a wireless connection function, and the like. At present, examples of some terminals are: a smart phone (Mobile Phone), a Pocket Personal Computer (PPC), a handheld computer, a Personal Digital Assistant (PDA), a notebook computer, a tablet computer, a wearable device, or a vehicle-mounted device, etc. In addition, when it is a vehicle-to-everything (V2X) communication system, the terminal device may also be a vehicle-mounted device. It should be understood that the embodiments of the present disclosure do not limit the specific technology and specific device form adopted by the terminal.

The terminal involved in the embodiments of the present disclosure may be understood as a new type of terminal designed in 5G NR: low-capability terminals. The low-capability terminal is sometimes called a Reduced capability UE, or a Redcap terminal, or NR-lite for short. In the embodiments of the present disclosure, the new terminal is called a Redcap terminal.

Similar to Internet of Things (IoT) devices in Long Term Evolution (LTE), 5G NR-lite usually needs to meet the following requirements:
- low cost, low complexity;
- a certain degree of coverage enhancement;
- power saving.

Since the current NR system is designed for high-end terminals with high-speed and low-latency, the current design cannot meet the above requirements of NR-lite. Therefore, it is necessary to modify the current NR system to meet the requirements of NR-lite. For example, in order to meet the requirements of low cost and low complexity, the Radio Frequency (RF) bandwidth of NR-IoT can be limited, such as limited to 5M Hz or 10M Hz, or the buffer size of NR-lite can be limited, which in turn limits the size of the transport block received each time, and so on. For power saving, a possible optimization direction is to simplify the communication process, and reduce the number of times the NR-lite terminal detects the downlink control channel, etc.

In the related art, in order to better support the terminals that cannot process the entire carrier bandwidth and the receiver-bandwidth adaptation, the NR standard defines BWP. In the NR system, Initial BWP is configured for terminals in the idle/inactive state. When the terminal enters the inactive state from the connected state, it will camp on the Initial BWP and monitor the Initial BWP. In the related art, considering factors such as TDD center frequency-alignment and SSB overhead of the Redcap terminal, an Initial DL BWP dedicated to the random access of the Redcap terminal is also defined for the Redcap terminal. The Initial DL BWP dedicated to the random access does not include Synchronization Signal and PBCH block (SSB) and the like.

However, after the terminal completes random access based on the Initial DL BWP dedicated for random access, which BWP should be monitored is still a matter of discussion. One method is to configure one active BWP for the terminal in the message 4 (Msg.4) of random access. However, this method will lead to more overhead. Moreover, this method will cause Msg.4 to have a larger transport block size (TBS), causing congestion in the initial DL BWP.

The embodiment of the present disclosure provides a BWP determination method, to determine the BWP monitored after the terminal completes the random access.

In an implementation, the embodiment of the present disclosure may determine a BWP different from the BWP used by the terminal for random access, as the BWP monitored by the terminal after random access.

In the embodiments of the present disclosure, for the convenience of description, the BWP to be monitored after the terminal completes random access is called the first BWP, and the BWP used by the terminal for random access is called the second BWP.

FIG. 2 is a flowchart showing a BWP determination method according to an exemplary embodiment. The BWP determination method may be executed alone or in combination with other embodiments of the present disclosure. As shown in FIG. 2, the BWP determination method is used in a terminal and includes the following steps.

In step S 11, a first BWP is determined.

The first BWP is a BWP monitored after the terminal completes the random access. The first BWP is different from the second BWP, and the second BWP is a BWP used when the terminal performs random access.

On the one hand, the terminal may determine the first BWP based on the configuration of the network device. On the other hand, the first BWP may also be determined based on a predefined rule.

The difference between the first BWP and the second BWP includes: different bandwidths of the first BWP and the second BWP, different subcarrier spacings between the first BWP and the second BWP, different frequency domain positions between the first BWP and the second BWP, and the like.

In the embodiment of the present disclosure, the first BWP to be monitored after the terminal completes random access is determined, and the first BWP is different from the second BWP used by the terminal for random access, thereby realizing the determination of the BWP that needs to be monitored after the terminal completes random access.

In the embodiment of the present disclosure, after completing the random access, the terminal may switch to the determined first BWP for monitoring.

FIG. 3 is a flowchart showing a BWP determination method according to an exemplary embodiment. The BWP determination method may be executed alone or in combination with other embodiments of the present disclosure. As shown in FIG. 3, the BWP determination method is used in a terminal and includes the following steps.

In step S21, it is determined that the terminal completes random access by using the second BWP.

The random access procedure performed by the terminal using the second BWP is similar to the random access procedure in the related art, for example, four-step random access may be performed, or two-step random access may be performed.

In step S22, it is switched from the second BWP to the first BWP for monitoring.

In the embodiment of the present disclosure, since the terminal has determined the first BWP to be monitored after random access, the terminal may automatically switch to the first BWP for monitoring after the random access is completed.

In the embodiment of the present disclosure, the process of determining the first BWP by the terminal will be described below.

In an implementation, the terminal determines the first BWP based on the configuration of the network device.

In an example, the terminal may determine the first BWP based on a signaling configured by the network device. The network device sends a signaling for configuring the first BWP, and the terminal receives the signaling sent by the network device, and determines the first BWP based on the signaling.

In an implementation of the embodiment of the present disclosure, the network device may configure a dedicated signaling of the terminal, that is, the network device sends the signaling configured with the first BWP to the terminal dedicated to the signaling. The BWP (the first BWP) that the terminal needs to monitor subsequently may be included in the dedicated signaling of the terminal. The dedicated signaling may not include the BWP that the terminal needs to monitor subsequently.

In an implementation, in the embodiment of the present disclosure, in the case that the dedicated signaling of the terminal is configured with the first BWP that the terminal needs to monitor subsequently, the terminal determines that the BWP that needs to be monitored subsequently is the first BWP.

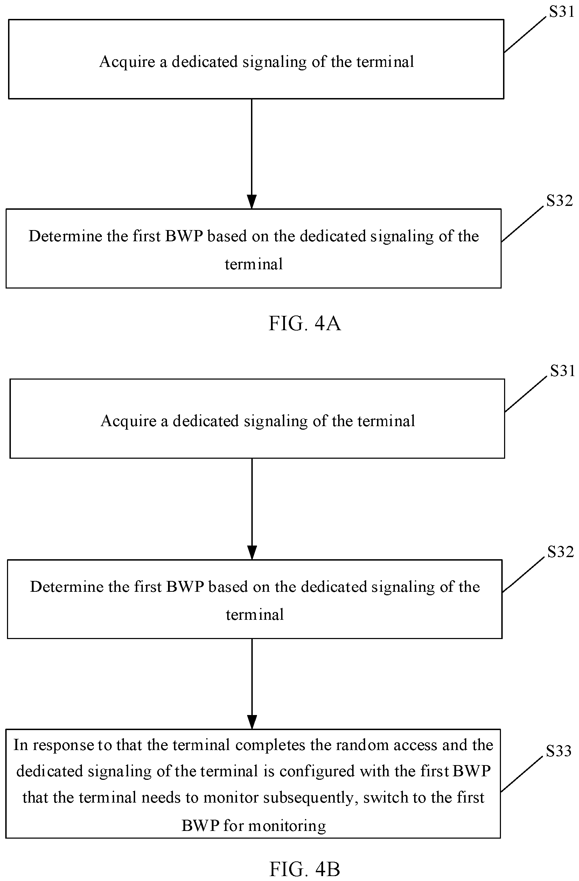

FIG. 4A is a flowchart showing a BWP determination method according to an exemplary embodiment. The BWP determination method may be executed alone or in combination with other embodiments of the present disclosure. As shown in FIG. 4A, the BWP determination method is used in a terminal, and includes the following steps.

In step S31, a dedicated signaling of the terminal is acquired.

In the embodiment of the present disclosure, the dedicated signaling of the terminal includes the first BWP to be monitored by the terminal subsequently.

In step S32, the first BWP is determined based on the dedicated signaling of the terminal.

Further, in the embodiment of the present disclosure, after determining that the random access is completed, the terminal may switch to the first BWP included in the dedicated signaling for monitoring.

FIG. 4B is a flowchart showing a BWP determination method according to an exemplary embodiment. The BWP determination method may be executed alone or in combination with other embodiments of the present disclosure. As shown in FIG. 4B, the BWP determination method is used in a terminal, and includes the following steps.

In step S33, in response to that the terminal completes the random access and the dedicated signaling of the terminal is configured with the first BWP that the terminal needs to monitor subsequently, the first BWP is switched to for monitoring.

In the embodiment of the present disclosure, in the case that the first BWP that the terminal needs to monitor subsequently is configured in the dedicated signaling of the terminal, the first BWP is switched to for monitoring, which can avoid the problem of unclear BWP to be monitored after the random access is completed.

In the BWP determination method provided in the embodiments of the present disclosure, the first BWP to be monitored after random access may be configured in a broadcast signaling.

In another example, the network device may configure a broadcast signaling including the first BWP, and the broadcast signaling including the first BWP may be shared among terminals, that is, the network device may send the broadcast signaling including the first BWP to a plurality of terminals, for example, all terminals of the same type. In the embodiments of the present disclosure, the terminals sharing the broadcast signaling of the first BWP are referred to as terminals of first type. The terminals of first type may be Redcap terminals.

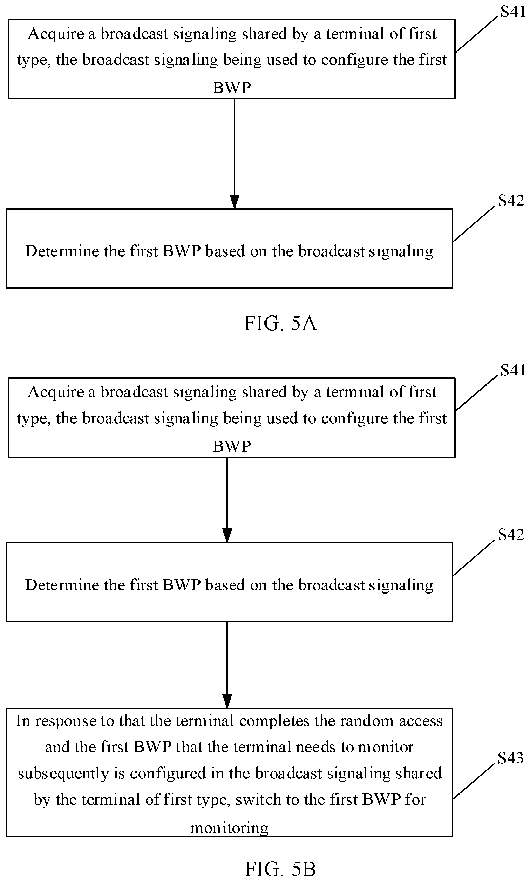

FIG. 5A is a flowchart showing a BWP determination method according to an exemplary embodiment. The BWP determination method may be executed alone or in combination with other embodiments of the present disclosure. As shown in FIG. 5, the BWP determination method is used in a terminal and includes the following steps.

In step S41, a broadcast signaling shared by terminals of first type is acquired, and the broadcast signaling is used to configure the first BWP.

In step S42, the first BWP is determined based on the broadcast signaling.

In the BWP determination method provided by the embodiments of the present disclosure, the terminal of first type may be adapted to the bandwidth capability of the Redcap terminal, so that the Redcap terminal can communicate in the first BWP applicable to the Redcap terminal. The communication capability of the terminal of first type is lower than a capability threshold. The communication capability of the terminal includes one or more of a transmitting and receiving bandwidth, the number of transmitting and receiving antennas, the maximum number of bits of a transport block, or a processing time delay.

Further, in the embodiment of the present disclosure, after determining that the random access is completed, the terminal may switch to the first BWP included in the dedicated signaling for monitoring.

FIG. 5B is a flowchart showing a BWP determination method according to an exemplary embodiment. The BWP determination method may be executed alone or in combination with other embodiments of the present disclosure. As shown in FIG. 5B, the BWP determination method is used in a terminal, and includes the following steps.

In step S43, in response to that the terminal completes the random access and the first BWP that the terminal needs to monitor subsequently is configured in the broadcast signaling shared by the terminal of first type, the first BWP is switched to for monitoring.

In the embodiment of the present disclosure, in the case that the first BWP to be monitored by the terminal is configured in the broadcast signaling, the first BWP is switched to for monitoring, which can avoid the problem of unclear BWP to be monitored after the random access is completed.

In another implementation, the terminal may determine to subsequently switch to the first BWP for monitoring based on a predefined condition.

The predefined condition includes at least one of the following conditions: the second BWP is a BWP dedicated to random access; the default BWP of the terminal is not configured in the dedicated signaling of the terminal. Hereinafter, the default BWP used by the terminal is called the third BWP.

In response to meeting the predefined condition, the terminal expects to switch to the first BWP for monitoring. In response to not satisfying the predefined condition, the terminal switches to the third BWP for detection.

The BWP determination method provided by the embodiment of the present disclosure can determine the first BWP monitored after the terminal completes the random access based on the predefinition, which can be understood as determining whether to switch to the first BWP for monitoring after the terminal completes the random access based on the configuration information. The configuration information includes an information field for indicating the first BWP.

In an implementation, the information field indicating the first BWP may enable or disable the first BWP. In the case that the first BWP is enabled, the terminal may switch to the first BWP for monitoring after completing the random access. In the case that the first BWP is disabled, the terminal cannot switch to the first BWP for monitoring after completing the random access.

It can be further understood that, in the embodiment of the present disclosure, the terminal may determine the BWP to be monitored subsequently based on the predefined condition in the case that the network device does not configure the first BWP. In an example, if the first BWP is not configured in the dedicated signaling of the terminal, the terminal may switch to the default BWP used by the terminal for monitoring after completing the random access. Alternatively, if the first BWP is not configured in the broadcast signaling shared by the terminals of the first type, the terminal may switch to the default BWP used by the terminal for monitoring after completing the random access.

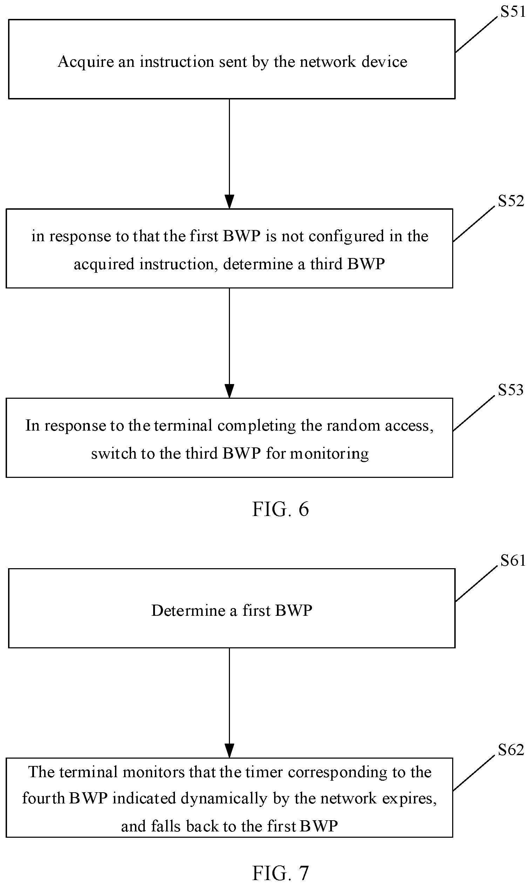

FIG. 6 is a flowchart showing a BWP determination method according to an exemplary embodiment. The BWP determination method may be executed alone or in combination with other embodiments of the present disclosure. As shown in FIG. 6, the BWP determination method is used in a terminal and includes the following steps.

In step S51, an instruction sent by the network device is acquired.

The instruction sent by the network device may be a dedicated signaling of the terminal, or may be a broadcast signaling shared among terminals.

In step S52, in response to that the first BWP is not configured in the acquired signaling, a third BWP is determined.

In step S53, in response to the terminal completing the random access, the third BWP is switched to for monitoring.

The third BWP is a default BWP used by the terminal. The default BWP used by the terminal can be determined based on a common control resource set (CORESET). For example, the third BWP may be a BWP defined in CORESET#0.

In an implementation provided by an embodiment of the present disclosure, the first BWP includes an SSB. The SSB contained in the first BWP may be a cell-level SSB (cell-defined SSB) or a non-cell-level SSB (non-cell-defined SSB).

Further, in R15/R16, when the terminal is configured with dynamic BWP switch, the BWP that needs to be switched is indicated, which is hereinafter referred to as the fourth BWP. In the related art, there is a timer for switching to the fourth BWP. After the timer ends, the terminal will fall back to the default BWP. The default BWP may be configured by the network. If the network does not configure the default BWP, the terminal will fall back to the initial BWP by default. However, in the scenario where the initial BWP is a BWP dedicated to random access, since this initial BWP is only used for random access, it is not applicable to the connected state.

By applying the BWP determination method provided by the embodiments of the present disclosure, in response to the terminal determining the first BWP, the terminal monitors that the timer corresponding to the fourth BWP dynamically indicated by the network expires, and falls back to the first BWP.

FIG. 7 is a flowchart showing a BWP determination method according to an exemplary embodiment. The BWP determination method may be executed alone or in combination with other embodiments of the present disclosure. As shown in FIG. 7, the BWP determination method is used in a terminal and includes the following steps.

In step S61, a first BWP is determined.

In step S62, the terminal monitors that the timer corresponding to the fourth BWP indicated dynamically by the network expires, and falls back to the first BWP.

The timer corresponding to the fourth BWP may be understood as a timer configured when the network configures dynamic BWP switch for the terminal.

In the BWP determination method provided by the embodiments of the present disclosure, the terminal determines the first BWP, and the first BWP is different from the BWP used during random access. In the case where the second BWP dedicated to random access is configured, the terminal monitors that the timer corresponding to the fourth BWP dynamically indicated by the network expires, and falls back to the first BWP, which can solve the problem that the default BWP is not clear in the case that the corresponding timer expires during dynamic BWP switch in the related art.

It can be understood that the above BWP determination method provided by the embodiments of the present disclosure may be applicable to the Redcap terminal.

In the case that a BWP dedicated to random access (Initial DL BWP only for RACH) is configured for the RedCap terminal, the BWP to be monitored after completing the random access may be determined based on the method for determining the BWP after completing the random access provided by the embodiments of the present disclosure. Moreover, the behavior of the terminal is clarified based on the method for determining the BWP provided by the embodiments of the present disclosure, for example, the terminal may fall back to the first BWP when the corresponding timer expires during dynamic BWP switch.

Based on the same concept, the embodiment of the present disclosure also provides a BWP determination method applied to a network device.

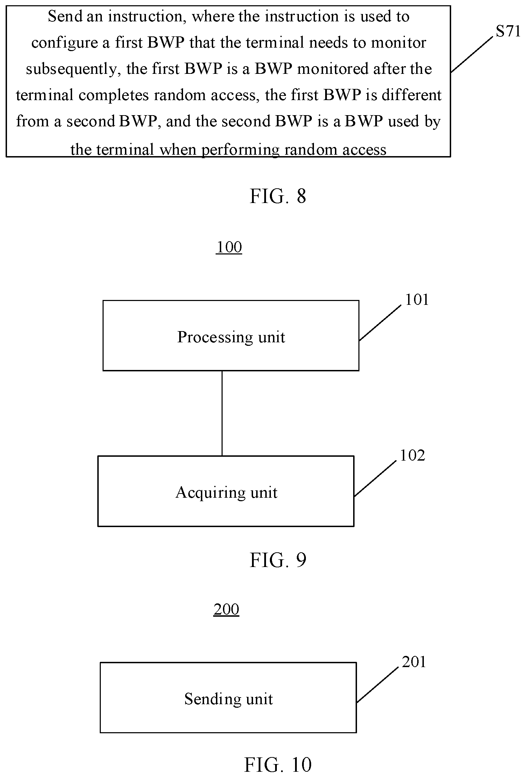

FIG. 8 is a flowchart showing a BWP determination method according to an exemplary embodiment. The BWP determination method may be executed alone or in combination with other embodiments of the present disclosure. As shown in FIG. 8, the BWP determination method is used in the network device and includes the following steps.

In step S71, an instruction is sent, and the instruction is used to configure a first BWP that the terminal needs to monitor subsequently.

The first BWP is a BWP monitored after the terminal completes random access; the first BWP is different from a second BWP, and the second BWP is a BWP used by the terminal when performing random access.

In an implementation, the instruction sent by the network device includes a dedicated signaling of the terminal, and the first BWP that the terminal needs to monitor subsequently is configured in the dedicated signaling of the terminal.

In another implementation, the instruction sent by the network device includes a broadcast signaling shared by terminals of first type, the broadcast signaling is used to configure the first BWP, the communication capability of the terminals of first type is lower than the capability threshold, and the communication capability includes one or more of a transmitting and receiving bandwidth, the number of transmitting and receiving antennas, the maximum number of bits in a transport block, or a processing time delay.

In the embodiment of the present disclosure, the network device may also send configuration information to the terminal, where the configuration information includes an information field for indicating enabling or disabling the first BWP. In the case that the first BWP is enabled, the terminal may switch to the first BWP for monitoring after completing the random access. In the case that the first BWP is disabled, the terminal cannot switch to the first BWP for monitoring after completing random access.

In an implementation, the network device may include an information field for indicating to enable the first BWP in the configuration information when it is determined that the predefined condition is met. The predefined condition includes at least one of the following conditions: the second BWP is a BWP dedicated to random access; the default BWP of the terminal is not configured in the dedicated signaling of the terminal.

It can be understood that, in the embodiment of the present disclosure, the network device may communicate with the terminal based on the first BWP. For example, the network device may specify the first BWP monitored by the terminal after completing the random access, and then perform subsequent communication scheduling on the terminal based on the first BWP.

In the BWP determination method provided by the embodiments of the present disclosure, the network device configures the first BWP used by the terminal after random access, so that the terminal can specify the BWP used after random access.

It can be understood that the BWP determination method provided in the embodiments of the present disclosure may be applicable to an implementation in which the terminal interacts with the network device to implement BWP determination.

It should be noted that those skilled in the art can understand that the various implementations/embodiments mentioned above in the embodiments of the present disclosure may be used in conjunction with the foregoing embodiments, or may be used independently. Whether they are used alone or in combination with the foregoing embodiments, their implementation principles are similar. During the implementation of the present disclosure, some embodiments are described in the manner of being used together. Those skilled in the art can understand that such an illustration is not a limitation to the embodiments of the present disclosure.

Based on the same concept, an embodiment of the present disclosure further provides a BWP determination apparatus.

It can be understood that in order to realize the above-mentioned functions, the BWP determination apparatus provided by the embodiments of the present disclosure includes corresponding hardware structures and/or software modules for performing various functions. Combining the units and algorithm steps of each example disclosed in the embodiments of the present disclosure, the embodiments of the present disclosure can be implemented in the form of hardware or a combination of hardware and computer software. Whether a certain function is executed by hardware or by computer software driving hardware depends on the specific application and design constraints of the technical solution. Those skilled in the art may use different methods to implement the described functions for each specific application, but such implementation should not be regarded as going beyond the scope of the technical solutions of the embodiments of the present disclosure.

FIG. 9 is a block diagram of a BWP determination apparatus according to an exemplary embodiment. Referring to FIG. 9, the BWP determination apparatus 100 is applied to a terminal and includes a processing unit 101.

The processing unit 101 is configured to determine a first BWP, where the first BWP is a BWP monitored after the terminal completes random access. The first BWP is different from a second BWP, and the second BWP is a BWP used when the terminal performs random access.

In an implementation, the processing unit 101 is further configured to: switch from the second BWP to the first BWP for monitoring in response to the terminal completing the random access.

In an implementation, the BWP determining apparatus further includes an acquiring unit 102, configured to acquire an instruction sent by the network device, and the instruction is used to configure the first BWP that the terminal needs to monitor subsequently. The processing unit 101 is configured to determine the first BWP based on the instruction.

In an implementation, the acquiring unit 102 is configured to: acquire a dedicated signaling of the terminal, and the first BWP that the terminal needs to monitor subsequently is configured in the dedicated signaling of the terminal.

In an implementation, the acquiring unit 102 is configured to: acquire a broadcast signaling shared by a terminal of first type, the broadcast signaling is used to configure the first BWP, a communication capability of the terminal of first type is lower than a capability threshold, and the communication capability includes one or more of transmitting and receiving bandwidth, the number of transmitting and receiving antennas, the maximum number of bits in a transport block, or a processing time delay.

In an implementation, the BWP processing unit 101 is further configured to: determine a third BWP in response to the first BWP not being configured in the acquired instruction. The third BWP is a default BWP used by the terminal, and is determined based on a common control resource set.

In an implementation, the processing unit 101 is configured to: determine to switch to the first BWP for monitoring based on configuration information. The configuration information includes an information field for indicating enabling or disabling the first BWP.

In an implementation, in response to meeting a predefined condition, the configuration information includes an information field for indicating to enable the first BWP. The predefined condition includes at least one of the following conditions:

the second BWP is a BWP dedicated to random access; a default BWP of the terminal is not configured in the dedicated signaling of the terminal.

In an implementation, the first BWP includes a synchronization broadcast signal block.

In an implementation, the processing unit 101 is further configured to: fall back to the first BWP in response to that a timeout of a timer corresponding to a fourth BWP indicated dynamically by a network is monitored by the terminal. The timer is a timer configured when the network configures dynamic BWP switch for the terminal.

FIG. 10 is a block diagram of a BWP determination apparatus according to an exemplary embodiment. Referring to FIG. 10, the BWP determining apparatus 200 is applied to a network device, and includes a sending unit 201.

The sending unit 201 is configured to send an instruction, and the instruction is used to configure a first BWP that the terminal needs to monitor subsequently; the first BWP is a BWP that the terminal monitors after completing random access; the first BWP is different from a second BWP, and the second BWP is a BWP used by the terminal for random access.

In an implementation, the instruction includes a dedicated signaling of the terminal, and the first BWP that the terminal needs to monitor subsequently is configured in the dedicated signaling of the terminal; or the instruction includes a broadcast signaling shared by a terminal of first type, the broadcast signaling is used to configure the first BWP, a communication capability of the terminal of first type is lower than a capability threshold, and the communication capability includes one or more of the transmitting and receiving bandwidth, the number of transmitting and receiving antennas, a maximum number of bits of a transport block, or a processing time delay.

In an implementation, the sending unit 201 is further configured to: send configuration information, where the configuration information includes an information field for indicating enabling or disabling the first BWP.

In an implementation, in response to satisfying a predefined condition, the configuration information includes an information field for indicating to enable the first BWP.

The predefined condition includes at least one of the following conditions: the second BWP is a BWP dedicated to random access; a default BWP of the terminal is not configured in a dedicated signaling of the terminal.

In an implementation, the sending unit 201 is further configured to: communicate with the terminal based on the first BWP.

With respect to the apparatuses in the above embodiments, the specific manners for performing operations for individual modules therein have been described in detail in the embodiments regarding the methods, which will not be elaborated herein.

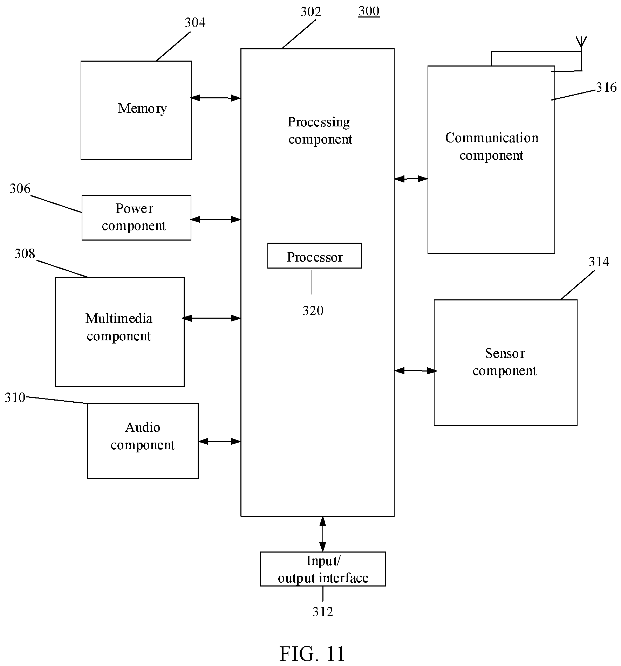

FIG. 11 is a block diagram showing an apparatus for determining a BWP according to an exemplary embodiment. The BWP determining apparatus 300 may be provided as the terminal involved in the above embodiments. For example, the apparatus 300 may be a mobile phone, a computer, a digital broadcast terminal, a messaging device, a gaming console, a tablet, a medical device, exercise equipment, a personal digital assistant, and the like.

Referring to FIG. 11, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support operations of the apparatus 300. Examples of such data include instructions for any applications or methods operating on the apparatus 300, contact data, phonebook data, messages, pictures, videos, etc. The memory 304 may be implemented using any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the apparatus 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor assembly 314 includes one or more sensors to provide status assessments of various aspects of the apparatus 300. For instance, the sensor component 314 may detect an open/closed status of the apparatus 300, relative positioning of components, e.g., the display and keypad, of the apparatus 300, a change in position of the apparatus 300 or a component of the apparatus 300, a presence or absence of user contact with the apparatus 300, an orientation or an acceleration/deceleration of the apparatus 300, and a change in temperature of the apparatus 300. The sensor assembly 314 may include a proximity sensor configured to detect the presence of nearby objects without any physical contact. The sensor assembly 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 can access a wireless network based on a communication standard, such as WiFi, 2G, or 2G, or a combination thereof. In one exemplary embodiment, the communication component 316 receives a broadcast signal or broadcast associated information from an external broadcast management system via a broadcast channel. In one exemplary embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic component, for performing the above described methods.

In exemplary embodiments, there is also provided a storage medium including instructions, such as the memory 304 including instructions, which can be executed by the processor 320 of the apparatus 300 to complete the above-described methods. For example, the non-transitory computer-readable storage medium may be a ROM, a random access memory (RAM), a CD-ROM, a magnetic tape, a floppy disk, an optical data storage device, and the like.

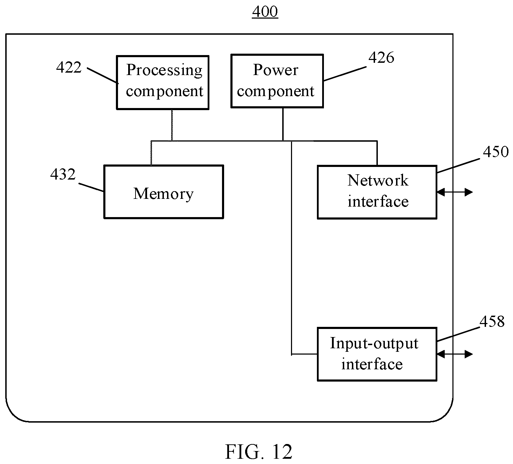

FIG. 12 is a block diagram of an apparatus 400 for determining a BWP according to an exemplary embodiment. For example, the apparatus 400 may be provided as a network device. Referring to FIG. 12, the apparatus 400 includes a processing component 422, which further includes one or more processors, and a memory resource represented by a memory 432 for storing instructions executable by the processing component 422, such as application programs. The application program stored in the memory 432 may include one or more modules each corresponding to a set of instructions. In addition, the processing component 422 is configured to execute the instructions to perform the above-described methods.

The apparatus 400 may also include a power component 426 configured to perform power management of the apparatus 400, a wired or wireless network interface 450 configured to connect the apparatus 400 to a network, and an input-output (I/O) interface 458. The apparatus 400 can operate based on an operating system stored in the memory 432, such as Windows Server^{™}, Mac OS X^{™}, Unix^{™}, Linux^{™}, FreeBSD^{™} or the like.

In exemplary embodiments, the apparatus 400 is applied to include: a processor; and a memory for storing instructions executable by the processor. The processor is configured to execute the above-described random access method.

In exemplary embodiments, there is also provided a non-transitory computer-readable storage medium including instructions, such as the memory 432 including instructions, and the instructions can be executed by the processing component 422 of the apparatus 400 to implement the above-described methods. For example, the non-transitory computer-readable storage medium may be a ROM, a random access memory (RAM), a CD-ROM, a magnetic tape, a floppy disk, an optical data storage device, and the like.

It can be further understood that "a plurality of" in the present disclosure refers to two or more, and other quantifiers are similar thereto. "And/or" describes the association relationship of associated objects, indicating that there may be three types of relationships, for example, A and/or B may indicate: A exists alone, A and B exist simultaneously, and B exists independently. The character "/" generally indicates that the contextual objects have an "or" relationship. The singular forms "a", "said" and "the" are also intended to include the plural unless the context clearly dictates otherwise.

It can be further understood that the terms "first", "second", etc. are used to describe various information, but the information should not be limited to these terms. These terms are only used to distinguish information of the same type from one another, and do not imply a specific order or degree of importance. In fact, expressions such as "first" and "second" can be used interchangeably. For example, without departing from the scope of the present disclosure, first information may also be called second information, and similarly, second information may also be called first information.

It can be further understood that although operations are described in a specific order in the drawings in the embodiments of the present disclosure, it should not be understood as requiring that these operations are performed in the specific order shown or in a serial order, or that all operations are performed to obtain the desired result. In certain circumstances, multitasking and parallel processing may be advantageous.

Other embodiments of the present disclosure will be readily apparent to those skilled in the art from consideration of the specification and practice of the contents disclosed herein. This application is intended to cover any modification, use or adaptation of the present disclosure, and these modifications, uses or adaptations follow the general principles of the present disclosure and include common knowledge or habitual technical means in the technical field not disclosed in the present disclosure.

It should be understood that the present disclosure is not limited to the precise constructions which have been described above and shown in the drawings, and various modifications and changes may be made without departing from the scope thereof. The scope of the present disclosure is limited only by the scope of the appended claims.

## Claims

1. A bandwidth part (BWP) determination method, applied to a terminal, wherein the BWP determination method comprises:
determining a first BWP, wherein the first BWP is a BWP monitored after the terminal completes a random access; and
the first BWP is different from a second BWP, and the second BWP is a BWP used when the terminal performs the random access.

2. The BWP determination method according to claim 1, further comprising:
in response to the terminal completing the random access, switching from the second BWP to the first BWP for monitoring.

3. The BWP determination method according to claim 1 or 2, wherein determining the first BWP comprises:
acquiring an instruction sent by a network device, wherein the instruction is used to configure the first BWP that the terminal needs to monitor subsequently; and
determining the first BWP based on the instruction.

4. The BWP determination method according to claim 3, wherein the instruction comprises a dedicated signaling of the terminal, and the first BWP that the terminal needs to monitor subsequently is configured in the dedicated signaling of the terminal; or
the instruction comprises a broadcast signaling shared by a terminal of first type, the broadcast signaling is used to configure the first BWP, a communication capability of the terminal of first type is lower than a capability threshold, and the communication capability comprises one or more of a transmitting and receiving bandwidth, a number of transmitting and receiving antennas, a maximum number of bits of a transport block, or a processing time delay.

5. The BWP determination method according to claim 3 or 4, further comprising:
determining a third BWP in response to the first BWP not being configured in the acquired instruction;
wherein the third BWP is a default BWP used by the terminal, and is determined based on a common control resource set.

6. The BWP determination method according to any one of claims 2 to 5, further comprising:
determining to switch to the first BWP for monitoring based on configuration information;
wherein the configuration information comprises an information field for indicating to enable or disable the first BWP.

7. The BWP determination method according to claim 6, wherein in response to satisfying a predefined condition, the configuration information comprises an information field for indicating to enable the first BWP;
the predefined condition comprises at least one of following conditions:
the second BWP is a BWP dedicated to the random access; or
a default BWP of the terminal is not configured in a dedicated signaling of the terminal.

8. The BWP determination method according to claim 1, wherein the first BWP comprises a synchronization broadcast signal block.

9. The BWP determination method according to claim 1, further comprising:
in response to that the terminal monitors a timeout of a timer corresponding to a fourth BWP dynamically indicated by a network, falling back to the first BWP;
wherein the timer is a timer configured by the network when configuring a dynamic BWP switch for the terminal.

10. A bandwidth part (BWP) determination method, applied to a network device, wherein the BWP determination method comprises:
sending an instruction, wherein the instruction is used to configure a first BWP that a terminal needs to monitor subsequently;
the first BWP is a BWP monitored after the terminal completes a random access; and
the first BWP is different from a second BWP, and the second BWP is a BWP used when the terminal performs the random access.

11. The BWP determination method according to claim 10, wherein the instruction comprises a dedicated signaling of the terminal, and the first BWP that the terminal needs to monitor subsequently is configured in the dedicated signaling of the terminal; or
the instruction comprises a broadcast signaling shared by a terminal of first type, the broadcast signaling is used to configure the first BWP, a communication capability of the terminal of first type is lower than a capability threshold, and the communication capability comprises one or more of a transmitting and receiving bandwidth, a number of transmitting and receiving antennas, a maximum number of bits of a transport block, or a processing time delay.

12. The BWP determination method according to claim 10 or 11, further comprising:
sending configuration information, wherein the configuration information comprises an information field for indicating to enable or disable the first BWP.

13. The BWP determination method according to claim 12, wherein in response to satisfying a predefined condition, the configuration information comprises an information field for indicating to enable the first BWP;
the predefined condition comprises at least one of following conditions:
the second BWP is a BWP dedicated to the random access; or
a default BWP of the terminal is not configured in a dedicated signaling of the terminal.

14. The BWP determination method according to any one of claims 11 to 13, further comprising:
communicating with the terminal based on the first BWP.

15. A bandwidth part (BWP) determination apparatus, comprising:
a processing unit, configured to determine a first BWP, wherein the first BWP is a BWP monitored after a terminal completes a random access; and
the first BWP is different from a second BWP, and the second BWP is a BWP used when the terminal performs the random access.

16. A bandwidth part (BWP) determination apparatus, comprising:
a sending unit, configured to send an instruction, wherein the instruction is used to configure a first BWP that a terminal needs to monitor subsequently;
the first BWP is a BWP monitored after the terminal completes a random access; and
the first BWP is different from a second BWP, and the second BWP is a BWP used when the terminal performs the random access.

17. A bandwidth part (BWP) determination apparatus, comprising:
a processor; and
a memory for storing instructions executable by the processor;
wherein the processor is configured to execute the BWP determination method according to any one of claims 1-9.

18. A bandwidth part (BWP) determination apparatus, comprising:
a processor; and
a memory for storing instructions executable by the processor;
wherein the processor is configured to execute the BWP determination method according to any one of claims 10-14.

19. A storage medium, wherein instructions are stored in the storage medium, and when the instructions in the storage medium are executed by a processor of a terminal, the terminal is enabled to execute the BWP determination method according to any one of claims 1 to 9.

20. A storage medium, wherein instructions are stored in the storage medium, and when the instructions in the storage medium are executed by a processor of a terminal, the terminal is enabled to execute the BWP determination method according to any one of claims 10 to 14.
